**Europäisches Patentamt**

**European Patent Office**

**Office européen des brevets**

(19)

(11) Veröffentlichungsnummer : **0 417 791 B1**

(12) ## EUROPÄISCHE PATENTSCHRIFT

(45) Veröffentlichungstag der Patentschrift :
**21.07.93 Patentblatt 93/29**

(51) Int. Cl.⁵ : **G01J 5/06**

(21) Anmeldenummer : **90117666.9**

(22) Anmeldetag : **13.09.90**

(54) **Verfahren und Vorrichtung zur Kompensation der Gehäuse- oder Umgebungstemperatur eines Pyrometers.**

(30) Priorität : **14.09.89 DE 3930828**

(43) Veröffentlichungstag der Anmeldung :
**20.03.91 Patentblatt 91/12**

(45) Bekanntmachung des Hinweises auf die
Patenterteilung :
**21.07.93 Patentblatt 93/29**

(84) Benannte Vertragsstaaten :
**AT BE CH DE DK ES FR GB GR IT LI LU NL SE**

(56) Entgegenhaltungen :
EP-A- 0 338 639
WO-A-81/00764
DD-A- 232 981

(56) Entgegenhaltungen :
DE-A- 3 007 747
GB-A- 1 572 666
US-A- 3 952 595
US-A- 4 456 919

(73) Patentinhaber : **ULTRAKUST ELECTRONIC GmbH**
**Sudetenstrasse 5-7**
**W-8375 Ruhmannsfelden (DE)**

(72) Erfinder : **Knappe, Wolfgang**
**Landshuter Allee 120**
**W-8000 Munchen 19 (DE)**

(74) Vertreter : **Heim, Hans-Karl, Dipl.-Ing. et al**
**c/o Weber & Heim Hofbrunnstrasse 36**
**W-8000 München 71 (DE)**

## Beschreibung

Die Erfindung betrifft ein Verfahren zur Kompensation der Gehäuse- oder Umgebungstemperatur eines Pyrometers, das insbesondere mit einem Photonendetektor oder thermischen Detektor zur Strahlungsdetektion ausgestattet ist. Des weiteren betrifft die Erfindung auch Pyrometer-Vorrichtungen mit stark reduzierter Empfindlichkeit gegenüber Schwankungen der Gehäuse- oder Umgebungstemperatur, die insbesondere zur Durchführung des Verfahrens geeignet sind.

Die Erfindung betrifft daher auch ein Pyrometer, das aufgrund einer besonderen Ausgestaltung und einer speziellen Signalverarbeitungsform prinzipbedingt nur sehr geringe Querempfindlichkeiten gegenüber seiner Gehäusestrahlung und/oder Schwankungen der Gehäuse- bzw. Umgebungstemperatur aufweist. Durch konstruktive Maßnahmen werden das Auftreten von Störgrößen von vornherein verhindert oder aber ihre Auswirkungen klein gehalten. Die erfindungsgemäße Konsequenz ist der Wegfall von Maßnahmen zur Erfassung der Störgrößen nebst zugehöriger Signalverarbeitung und -verrechnung unter Verwendung zusätzlicher, die Störgrößen erfassender Sensoren.

Querempfindlichkeiten gegenüber Gehäusestrahlung und/oder Schwankungen der Gehäuse- bzw. Umgebungstemperatur sind unerwünschte Eigenschaften von Pyrometern, die sich insbesondere im Niedertemperaturbereich sehr störend auswirken. Speziell dann, wenn Messungen unter sich schnell ändernden Umgebungsbedingungen durchgeführt werden, kann sich der Meßkopf, im wesentlichen bestehend aus den den Strahlengang beeinflussenden optischen Elementen OE, dem Detektor DET und den mechanischen, das Gehäuse bildenden Teilen nicht so schnell mit seiner gesamten Masse und seiner räumlichen Ausdehnung der herrschenden Umgebungstemperatur angleichen, daß von einem stationären Temperaturzustand ausgegangen werden kann. Die erfindungsgemäße Ausgestaltung eines Pyrometers ermöglicht einen fehlerarmen Einsatz unter diesen, im allgemeinen ungünstigen Randbedingungen.

Es ist bekannt, daß zur Eliminierung der Querempfindlichkeiten von Pyrometern die Gehäusestrahlung und/ oder die Gehäuse- bzw. Umgebungstemperatur mit Sensoren erfaßt und im Zuge der Signalverarbeitung Signale gewonnen werden, die eine schaltungstechnische oder rechentechnische Kompensation zulassen (DE 29 53 811). Aus dieser PS ist auch bekannt, eine, im speziellen konstante Referenzstrahlung über Modulationseinrichtungen zyklisch einzublenden und über geeignete Rechenoperationen die Querempfindlichkeit bezüglich der Gehäusestrahlung zu eliminieren. Den bekannten Verfahren ist gemeinsam, daß die zu eliminierenden Einflußgrößen zunächst in irgendeiner Form erfaßt werden, um anschließend kompensiert zu werden. Zur Gewinnung eines Meßwerts für die Temperatur des zu messenden Objekts $T_O$ muß, vor allem in der Niedertemperaturpyrometrie mit thermischen Detektoren, die Temperatur des Aktiven Detektorelements ADE sehr genau bekannt sein, damit z.B. aus der Beziehung für ein Gesamtstrahlungspyrometer

$$P_{IR} = \sigma \cdot (T_O^4 - T_{ADE}^4) \cdot A_{ADE} \quad (1)$$

mit $P_{IR}$     : Strahlungsleistung am aktiven Detektorelement

$\sigma$        : Stefan- Boltzmann- Konstante

$T_O$      : Objekttemperatur

$A_{ADE}$    : Fläche des Aktiven Detektorelements

$T_{ADE}$    : Temperatur des Aktiven Detektorelements

die Objekttemperatur $T_O$ bestimmt werden. Ist beispielsweise $T_O = T_{ADE}$, so liefert das Strahlungssignal den Wert Null. Aus dieser Kenntnis kann die Objekttemperatur aus der innerhalb gewisser Fehlergrenzen bekannten Temperatur $T_{ADE}$ des Aktiven Detektorelements ADE ermittelt werden. In der Praxis ist der Spektralbereich immer begrenzt, was zur Folge hat, daß sich die Gesetzmäßigkeit gemäß (1) ändert und folgende, empirisch gewonnene Form annimmt:

$$P_{IR} = k \cdot \sigma \cdot (T_O^x - T_{ADE}^x) A_{ADE} \quad (2)$$

mit k     : dimensionsloser Korrekturfaktor

x       : Exponent i.d.R. < 4.

In bekannten Pyrometerausführungen wird zur Ermittlung der Temperatur $T_{ADE}$ des Aktiven Detektorelements ADE am Detektorgehäuse oder einem anderen, für die Temperatur $T_{ADE}$ repräsentativen Ort ein Sensor angebracht, der ein entsprechendes Signal liefert. Es sind darüberhinaus auch Strahlungssensoren bekannt, die in einem Gehäuse sowohl das Aktive Detektorelement für die Strahlung als auch einen, von der Strahlung abgeschirmten Temperaturfühler, meist einen Widerstand beinhalten (DDR PS 23 29 81). Ein weiterführender Schritt besteht darin, den Träger des Aktiven Detektorelements z.B. als Siliziumschicht auszubilden, auf dessen Oberseite sich eine, das Aktive Detektorelement bildende Struktur befindet und auf dessen Unterseite Strukturen aufgebracht sind, die in Verbindung mit der Siliziumträgerschicht einen temperaturabhängigen Sensor bilden (US-A-4,456,919). Allen bekannten Verfahren ist gemeinsam, die Temperatur des Aktiven Detektorelements möglichst störungsfrei, unmittelbar und ohne dynamische Fehler in Form von unterschiedlichen Erwärmungszeitkonstanten zwischen Aktivem Detektorelemernt und zugeordnetem Temperatursensor erfassen zu wollen. Diesem Vorhaben sind prinzipielle Grenzen gesetzt, insofern daß immer ein weiterer Sensor zum Einsatz kommt, der sich an einem anderen als dem Ort des Aktiven Detektorelements ADE befinden muß und der demzufolge nie genau die Verhältnisse am Ort des Aktiven Detektorelements weder statisch noch dynamisch wiedergeben kann. Aus der US-A-3,952,595 ist grundsätzlich bekannt, z.B. aus einer pH- Meßsonde neben der EMK, die im wesentlichen die $H^+$-Ionenkonzentration wiedergibt auch den Innenwiderstand der Sonde auszuwerten, um die temperaturabhängige Empfindlichkeit der Meßsonde zu kompensieren. Diese Art der Kompensation dient lediglich dazu, die statische Empfindlichkeit temperaturunabhängig zu machen, und dient beispielsweise nicht dazu, dynamische Meßfehler auf Grund unterschiedlicher Zeitkonstanten von Sonde und Temperatursensor zu vermeiden, ebensowenig dient das Verfahren dazu den räumlichen Unterschied zwischen Meßsondenort und Temperatursensorort zu vermeiden, allein schon deswegen nicht, weil zur pH- Wertmessung prinzipiell zwei Meßsonden erforderlich sind. Ein weiteres Verfahren ist aus der DE-A-30 07 747 bekannt, wo neben den Impulsen, die im Rahmen einer Drehzahlmessung aus einer induktiven Näherungssonde stammen, auch der temperaturabhängige Widerstand ihrer Kupferwicklung bestimmt wird, um die Temperatur an ihrem Einbauort zu erfassen. Auch hier wird keine dynamische Kompensation z.B. des Drehzahlsignals von der Temperatur angestrebt - in dem offengelegten Beispiel sind beide Größen voneinander vollständig unabhängig (Impulsfrequenz in Abhängigkeit von einer Wellendrehzahl und Innenwiderstand der Kupferwicklung in Abhängigkeit von der Öltemperatur in einem Schaltgetriebe für Verbrennungsmotoren)- sondern die Erfassung zweier unterschiedlicher physikalischer Größen aus einem Sensor, zwecks Einsparung eines weiteren.

Bei den gegenwärtig zur Pyrometrie verwendeten Verfahren und Vorrichtungen ist es als nachteilig anzusehen, daß auftretende Störgrößen (z.B. eigene Gehäusestrahlung und/oder Schwankungen der Gehäuse- bzw. Umgebungstemperatur) zunächst erfaßt werden, um im Zuge der Signalverarbeitung wieder eliminiert zu werden.

Weiterhin ist es nachteilig, daß der damit verbundene mechanische und elektronische Aufwand die Konstruktion und Realisierung eines präzisen Pyrometers verkompliziert und verteuert.

Auch können bisher lediglich die Verhältnisse am Ort der Kompensationssensoren, verbunden mit ihrer Eigendynamik, wiedergegeben werden, wobei der Einbauort nicht für alle Umgebungsbedingungen gleich repräsentativ ist.

Da aus den erfaßten Störgrößen keine weiteren Nutzinformationen abgeleitet werden, ist es wesentlich günstiger, durch konstruktive Maßnahmen von vornherein dafür zu sorgen, daß solche Störgrößen nicht auftreten bzw. sich nicht oder nur unbedeutend auswirken.

Derzeit ist der Einsatz der Pyrometrie, insbesondere der Niedertemperatur-Pyrometrie, auf solche Anwendungen beschränkt, die quasi stationäre Umgebungsbedingungen aufweisen.

**Aufgabe** der Erfindung ist es daher, ein Verfahren und eine Pyrometer-Vorrichtung zu schaffen, das bzw. die aufgrund besonderer Ausgestaltung und einer speziellen Signalverarbeitungsform prinzipbedingt nur sehr geringe Empfindlichkeit gegenüber Schwankungen der Gehäuse- bzw. Umgebungstemperatur, gegebenenfalls auch der Gehäusestrahlung, aufweist, wobei das Auftreten solcher Störgrößen von vornherein verhindert werden sollte oder aber ihre Auswirkungen genügend klein gehalten werden sollen.

Diese Aufgabe wird erfindungsgemäß durch die Merkmale der Verfahren nach den Ansprüchen 1, 2 oder 5 und vorrichtungsmäßig durch die Merkmale der Pyrometer-Vorrichtungen gemäß den Ansprüchen 8,11,14 oder 17 gelöst.

Vorteilhafte Weiterbildungen der Erfindung sind hierbei Gegenstand der Unteransprüche.

Bei einem gemäß der Erfindung ausgefürten Pyrometer ist von vornherein auf Grund konstruktiver Maßnahmen dafür gesorgt, daß solche Störgrößen nicht auftreten oder aber in ihren Auswirkungen sehr klein bleiben. Dies hat zur Folge, daß auf eine Störgrößenerfassung, die ohnehin keine nutzbare Information liefert und grundsätzlich zusätzliche Fehlerquellen beinhaltet, verzichtet werden kann. Daher wird sowohl die mechanische als auch die elektronische Realisation eines solchen erfindungsgemäßen Pyrometers wesentlich einfacher und billiger. Um prinzipbedingt dynamische Fehler bei der Erfassung der Temperatur $T_{ADE}$ des Aktiven Detektorelements ADE zu vermeiden, wird neben dem eigentlichen, auf Grund der einfallenden und absorbierten Strahlung entstehenden Detektorsignals eine weitere physikalische Größe des Aktiven Detektorelements ausgewertet, die nur wenig oder überhaupt nicht von der einfallenden und absorbierten Strahlung abhängt und im wesentlichen die Temperatur $T_{ADE}$ wiedergibt. Dieses Signal hat die selben dynamischen Eigenschaften, insbesondere Zeitkonstanten, wie das eigentliche, die Strahlung wiedergebende Signal, da beide aus ein und demselben Element abgeleitet sind. Daher ist erfindungsgemäß kein weiterer Sensor zur Erfassung der Temperatur $T_{ADE}$ des Aktiven Detektorelements ADE notwendig und die Probleme, die mit aufeinander abgestimmten Sensoren üblicherweise auftreten, sind hinfällig.

Gegenüber den eingangs beschriebenen bekannten Pyrometern sind die wesentlichen Vorteile des erfindungsgemäßen Pyrometers darin zu sehen,

daß keine Erfassung von Störgrößen notwendig ist und die mit der Weiterverarbeitung der ansonsten nutzlosen Informationen verbundenen Fehlerquellen statischer und dynamischer Natur entfallen.

Weiterhin sind keine Modulationseinrichtungen und damit keine bewegten, mechanischen Teile erforderlich, obwohl diese aber eingesetzt werden können.

Man erreicht eine erhebliche Vereinfachung des mechanischen und optischen Aufbaues.

Es können gewöhnliche, handelsübliche Strahlungssensoren ohne besondere innere Struktur eingesetzt werden.

Auch sind keine gepaarten oder aufeinander abgestimmten Sensorelemente notwendig.

Hierdurch vereinfacht sich die Signalverarbeitung und die erforderliche Elektronik.

Es sind somit kleinere Nachweisgrenzen bzw. kleinere Meßfleckdurchmesser der Gesamtanordnung realisierbar.

Bei einem gemäß der Erfindung ausgeführten Pyrometer ergibt sich daher insgesamt ein wesentlich verbessertes Fehlerverhalten bei stark schwankenden und wechselnden Umgebungsbedingungen, das der Pyrometrie, vor allem der Niedertemperaturpyrometrie z.B. in der Verfahrenstechnik neue, bisher wegen ungünstiger Randbedingungen verschlossene Einsatzgebiete und Anwendungen eröffnen kann. Durch die konsequente Ausschaltung bzw. weitgehende Reduzierung aller Störeinflüsse auf das Pyrometer, ergibt sich darüberhinaus eine einfachere und billigere Realisierungsmöglichkeit eines universell einsetzbaren Handgerätes.

Geeigneterweise kann ein Pyrometer mit stark reduzierten Querempfindlichkeiten gegenüber seiner Gehäusestrahlung und Schwankungen der Umgebungs- bzw. Gehäusetemperatur so gestaltet werden, daß das Detektorgesichtsfeld DGF mittels einer isothermischen Kontaktblende IKB, die sich in gutem thermischem Kontakt mit dem Detektorfenster DEF bzw. mit der das Detektorfenster DEF beinhaltenden Gehäuseseite des Detektors DET befindet, auf den von den davorliegenden optischen Elementen OE, den gewünschten optischen Abbildungseigenschaften und der Größe des Aktiven Detektorelements ADE vorgegebenen und erforderlichen Maximalwert begrenzt wird.

Des weiteren ist es zweckmäßig, die dem Aktiven Detektorelement ADE zugewandte Seite der isothermischen Kontaktblende IKB stark reflektierend auszubilden.

Außer den den Strahlengang beeinflussenden optischen Elementen OE sind alle weiteren mechanischen und elektronischen Komponenten, die aufgrund ihrer Eigentemperatur zu störender Gehäusestrahlung beitragen, außerhalb des isothermisch begrenzten Detektorgesichtsfeldes DGF angeordnet.

Zudem ist der aufgrund der isothermischen Beschränkung vorliegende Maximalstrahlengang MSG von stark strahlungsabsorbierenden Oberflächen berandet, die zudem noch durch geeignete Oberflächengestaltung Strahlungsfallen STF beinhalten, die einfallende Streustrahlung, insbesondere diejenige im Blickfeld der Strahlungsfallen STF liegender Gehäuseteile GT der äußeren Gehäusehülle(n) AGH nicht zum Detektor DET gelangen lassen.

Weiterhin sollte das spektrale Reflexionsverhalten von den Strahlengang beeinflussenden reflektierenden optischen Elementen OE bzw. das spektrale Transmissionsverhalten von den Strahlengang beeinflussenden, brechenden optischen Elementen OE dem spektralen Transmissionsverhalten des Detektorfensters DEF bzw. dem spektralen Empfindlichkeitsverlauf des Detektors DET so angepaßt sein, daß Eigenstrahlung dieser optischen Elemente nur in solchen Wellenlängenbereichen auftreten kann, für die das Detektorfenster DEF undurchlässig ist bzw. der Detektor DET keine bedeutsame Empfindlichkeit aufweist.

Zur Verminderung des Wärmeaustausches der Umgebung mit dem Detektor DET über seine elektrischen Anschlüsse EA sollten diese über dünne, schlecht wärmeleitende und ausreichend lange Zwischenstücke ZWS mit den folgenden Schaltelementen FSE bzw. mit der abgehenden Anschlußleitung AAL verbunden sein.

Hierbei sollten die Zwischenstücke ZWS in einem abgeschlossenen, sich unmittelbar an den Detektor DET anschließenden Raum ADR befinden.

Geeigneterweise werden sich sämtliche optischen Elemente OE, die isothermische Kontaktblende IKB und der Detektor DET in einem gemeinsamen Montagekörper MK befinden, der einen guten thermischen Kontakt aller an- und eingebauten Kononenten untereinander herstellt und der insbesondere den Maximalstrahlengang MSG zwischen den optischen Elementen OE und dem Detektor DET durch Oberflächen berandet, die mit Strahlungsfallen STF versehen sind.

Ein Wärmeaustausch durch Wärmeleitung zwischen einer oder mehreren äußeren Gehäusehülle(n) AGH und dem Montagekörper MK sollte nur an jeweils einer oder mehreren, genau definierten, mit schlecht wärmeleitendem Material ausgebildeten Übergangsstellen US möglich sein.

Die Lage der Übergangsstellen US sollte so gewählt sein, daß die Wärmeausbreitung im Montagekörper MK in günstiger Weise dergestalt erfolgt, daß sich die Komponenten im Montagekörper MK und der Montagekörper MK selbst in einer festen und vorbestimmten zeitlichen und/oder räumlichen Abfolge erwärmen.

Besonders vorteilhaft ist es, daß zur dynamisch prinzipbedingt fehlerfreien Bestimmung der Temperatur des Aktiven Detektorelements ADE eine weitere, temperaturabhängige physikalische Größe des Aktiven Detektorelements ADE erfaßt und ausgewertet wird, die überwiegend oder ausschließlich von der Eigentemperatur des Aktiven Detektorelements ADE abhängt und keine oder nur eine geringe Abhängigkeit von der einfallenden Strahlung aufweist und daß daraus die tatsächliche Temperatur des Aktiven Detektorelements ADE bestimmt wird.

Erwünscht ist des weiteren, daß die isothermische Kontaktblende IKB durch Wahl oder Ausgestaltung des Detektors DET mit einem entsprechenden Fensterquerschnitt des Detektorfensters DEF realisiert wird.

Eine Weiterbildung des Pyrometers besteht darin, daß die isothermische Kontaktblende IKB durch ein sich in einer Halterung befindliches, mit dem Montagekörper MK und dem Detektorfenster DEF bzw. der das Detektorfenster DEF beinhaltenden Seite des Detektorgehäuses in gutem thermischem Kontakt stehendes Filter geeigneter Größe realisiert, und daß die Transmissionseigenschaften dieses Filters so gewählt sind, daß sie dem spektralen Reflexionsverhalten von den Strahlengang beeinflussenden, reflektierenden optischen Elementen bzw. daß sie dem spektralen Transmissionsverhalten von den Strahlengang beeinflussenden brechenden optischen Elementen so angepaßt sind, daß Eigenstrahlung dieser optischen Elemente in bedeutsamen Maße nur in solchen Wellenlängenbereichen auftreten kann, für die das die isothermische Kontaktblende IKB ausbildende Filter undurchlässig ist.

Zweckmäßig kann das Pyrometer dadurch gekennzeichnet sein, daß die isothermische Kontaktblende IKB durch eine zyklisch den Strahlengang unterbrechende Vorrichtung gebildet wird, die sich vollständig oder überwiegend im Montagekörper MK befindet und mit diesem in gutem thermischem Kontakt steht.

Weiterhin sollte der Montagekörper MK und/oder eine oder mehrere der vorhandenen äußeren Gehäusehüllen AGH an ihren Außenflächen durch elektrische Heizung oder Kühlung auf konstanter Temperatur gehalten werden.

Konstruktiv zweckmäßig ist es, daß die Übergangsstücke US zwischen einer äußeren Gehäusehülle AGH und dem Montagekörper MK bzw. zwischen zwei äußeren Gehäusehüllen AGH sternförmig bzw. mit einem Profil und als ebener oder als geschlossener Ringkörper ausgebildet sind, und daß eine Anzahl von Profilenden auf der einen äußeren Gehäusehülle AGH aufliegt und daß die verbleibende Anzahl von Profilenden auf der anderen äußeren Gehäusehülle AGH oder auf dem Montagekörper MK aufliegt.

Ein besonderer Vorteil wird erreicht, indem die zusätzlich auszuwertende physikalische Größe des Aktiven Detektorelements ADE von der die einfallende und absorbierte Strahlung wiedergebende Größe durch schaltungstechnische Maßnahmen oder durch Einrichtungen, die den Strahlengang zyklisch unterbrechen, spektral getrennt oder trennbar gestaltet wird und beide Größen in verschiedenen Frequenzbereichen ausgewertet werden.

Darüber hinaus eignet es sich, daß nur eine physikalische Größe des Detektors DET in mindestens zwei voneinander unterschiedlichen Frequenzbereichen ausgewertet wird.

Vorteilhafterweise gestaltet man das Pyrometer so, daß die Abhängigkeit der zusätzlich auszuwertenden temperaturabhängigen physikalischen Größe von der einfallenden und absorbierten Strahlung rechentechnisch reduziert wird und ein mit geringeren Unsicherheiten behafteter Wert für die Temperatur des Aktiven Detektorelements ADE gewonnen wird.

Nachfolgend wird die Erfindung unter Bezugnahme auf die anliegenden Zeichnungen anhand einer bevorzugten Ausführungsform im einzelnen erläutert. Es zeigen:

Fig. 1    eine schematische Schnittdarstellung einer bevorzugten Ausführungsform eines Pyrometers gemäß der Erfindung;

Fig. 2    eine schematische Schnittdarstellung einer Strahlungsfalle STF mit beispielhaftem Strahlengang im Montagekörper MK als Detaildarstellung zu Fig. 1;

Fig. 3    eine schematische Schnittdarstellung der Anordnung der isothermischen Kontaktblende IKB, des Detektorfensters DEF, des Aktiven Detektorelements ADE und Teilen des Gehäuses des Detektors DET im Montagekörper MK als Detaildarstellung zu Fig. 1.

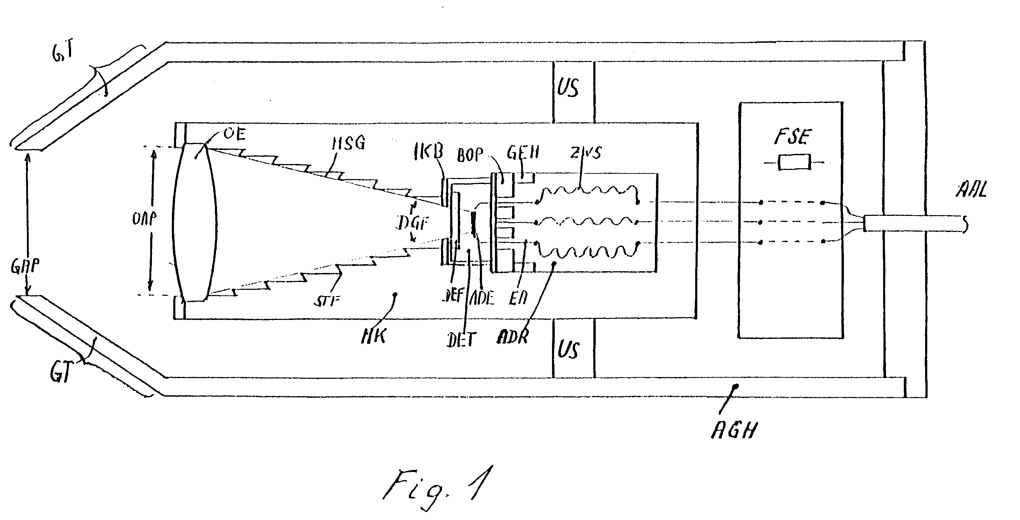

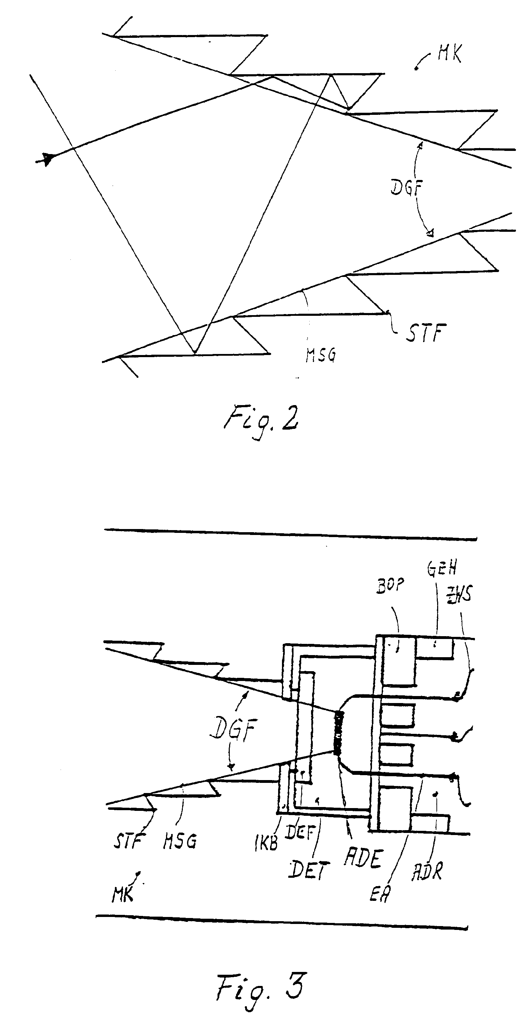

Bei einer bevorzugten Ausführungsform der Erfindung gelangt die zu detektierende Strahlung durch die Gehäuseapertur GAP auf eine als optisches Element OE wirkende Sammellinse, die auf Grund der Linsengleichung der Strahlenoptik mit ihrer Mittelebene in einem solchen Abstand von der üblicherweise dazu parallelen Ebene des Aktiven Detektorelements ADE angebracht ist, wie es zur Erreichung der gewünschten Vergrößerung, des gewünschten minimalen Meßfleckdurchmessers, etc. erforderlich ist. Der Öffnungswinkel des erfindungsgemäß zu begrenzenden Maximalstrahlenganges MSG wird dabei durch die optische Apertur OAP und der Größe des Aktiven Detektorelements ADE sowie der Entfernung der üblicherweise parallelen Ebenen, in denen OAP und ADE liegen bestimmt. Der üblicherweise rotationssymmetrisch ausgebildete Montagekörper MK beinhaltet eine konische Bohrung, deren Mantellinien dem Maximalstrahlengang MSG entsprechen, und die durch stufen- oder sägezahnförmige Vertiefungen, deren eine Seiten parallel zur optischen Achse der Anordnung verlaufen und deren andere Seiten spitzwinklig bis senkrecht auf den einen Seiten stehen, mit Strahlungsfallen STF ausgestattet ist, dergestalt, daß Strahlung, die nicht unter einem Winkel kleiner oder gleich dem halben Konusöffnungswinkel der Bohrung bzw. des Maximalstrahlenganges MSG zur optischen Achse einfällt, in diese Strahlungsfallen STF gelangt und sich auf Grund mehrmaliger sehr schwacher Reflexionen in einer solchen Strahlungsfalle STF "totläuft", bzw. sich aufgrund mehrmaliger, sehr schwacher Reflexionen auf gegenüberliegende, zur optischen Achse parallelverlaufende Seiten von Strahlungsfallen STF "totläuft". Dazu muß erfindungsgemäß die Oberfläche der mit Strahlungsfallen STF versehenen konischen Bohrung des Montagekörpers MK stark absorbierend sein. Beträgt der Absorbtionsgrad beispielsweise 0,95, so genügen drei Reflexionen, um die verbleibende Reststrahlung auf etwa 0,01% ihres Anfangswertes zu schwächen. Durch die erfindungsgemäß ausgeführten Strahlungsfallen STF in der Berandung des Maximalstrahlenganges MSG ist sichergestellt, daß sich außer den optischen Elementen OE kein materieller Gegenstand im Detektorgesichtsfeld DGF befindet und daher infolge seiner Eigenstrahlung keine Störstrahlung an den Detektor DET gelangen kann. Sämtliche Gehäuseteile GT, die im Blickfeld von Strahlungsfallen STF liegen, tragen auf Grund des gleichen erfindungsgemäßen Absorptionsmechanismus deshalb nicht zu einer Störstrahlung bei. Um das Detektorgesichtsfeld DGF ohne prinzipbedingte Störstrahlung zu begrenzen, wird dazu erfindungsgemäß die Isothermische Kontaktblende IKB unmittelbar vor dem Detektorfenster DEF und/ oder in gutem thermischen Kontakt mit dem Detektorfenster DEF oder der das Detektorfenster DEF beinhaltenden Seite des Detektorgehäuses angeordnet, dergestalt, daß die dem Aktiven Detektorelement ADE zugewandte Seite der Isothermischen Kontaktblende IKB stark reflektierend ist, und damit im wesentlichen die Eigenstrahlung des Aktiven Detektorelemnts ADE auf dieses zurückreflektiert. Im einfachsten Fall wird die Öffnung der Isothermischen Kontaktblende IKB durch einen entsprechend großen Öffnungsdurchmesser des Deckkreises des durch die konische, den Maximalstrahlengang MSG begrenzende Bohrung entstandenen Kegelstumpfes gebildet, wobei unmittelbar an die Deckkreisfläche sich das Detektorfenster DEF anschließt.

Um eine modulierte Strahlung auf das Aktive Detektorelement ADE gelangen zu lassen, wird die Isothermische Kontaktblende IKB in Form eines Blendenrades ausgebildet, wobei die Bohrungsdurchmesser im Blendenrad dem Maximalstrahlengang MSG auf die gleiche Weise anzupassen sind, wie es der Öffnungswinkel des Detektorgesichtsfeldes DGF ohne Modulationseinrichtung festlegt. Damit dieses Blendenrad ebenfalls in gutem thermischen Kontakt mit dem Montagekörper MK steht, ist in diesen an der betreffenden Stelle (unmittelbar vor dem Detektorfenster DEF bzw. der das Detektorfenster DEF beinhaltenden Seite des Detektorgehäuses) ein in seiner Breite der Dicke des Blendenrades angepaßter Einschnitt in radialer Richtung des Montagekörpers MK vorzunehmen, der das Blendenrad überwiegend oder besser vollständig aufnimmt. Der Antrieb dieses Blendenrades erfolgt über einen verzahnten Umfang bzw. axial von hinten über eine in axialer Richtung parallel zur optischen Achse des Strahlengangs verlaufenden, in einer ebensolchen Bohrung im Montagekörper MK gelagerten Welle. Für das erfindungsgemäße Pyrometer ist eine Strahlungsmodulation grundsätzlich nicht erforderlich, sie wird jedoch eingesetzt, wenn dies aus anderen Gründen wünschenswert oder erforderlich ist. Durch diese Ausgestaltung der Modulationseinnichtung wird die geringe Querempfindlichkeit des erfindungsgemäßen Pyrometers gegenüber seiner Gehäusestrahlung gewährleistet.

Der Detektor DET selbst- üblicherweise in einem modifizierten TO 5 bzw. TO 39 Transistorgehäuse untergebracht- befindet sich in einer, bezüglich seiner äußeren Gehäuseabmessungen fein tolerierten Aussparung im Montagekörper MK, dergestalt, daß das Detektorgehäuse möglichst vollständig und in gutem thermischen Kontakt mit den Begrenzungsflächen der Aussparung vom Montagekörper MK umgeben ist. Durch diese Maßnahme wird die Temperatur des Detektorgehäuses im wesentlichen durch die Temperatur des Montagekörpers MK eingeprägt und sichergestellt, daß sich über das Detektorgehäuse und die Isothermische Kontaktblende IKB keine Temperaturgradienten einstellen können. Insbesondere die Grundfläche des Detektorgehäuses, durch die üblicherweise die elektrischen Anschlußdrähte EA geführt werden, wird durch eine Bodenplatte BOP, mit entsprechenden Bohrungen für die elektrischen Anschlüsse EA versehen und durch eine Gewindehülse GEH in guten thermischen Kontakt zum Montagekörper MK gebracht.

An die Detektorgrundfläche schließt sich erfindungsgemäß ein abgeschlossener Raum ADR an, der Luftkonvektion weitgehend unterbindet und der die zur Vermeidung eines Wärmeausgleichs mit den folgenden Schaltelementen FSE bzw. der abgehenden Anschlußleitung AAL erforderlichen Zwischenstücke ZWS, erfindungsgemäß bestehend aus dünnem, genügend langem, schlecht wärmeleitendem Material z.B. Blei-Zinn-Silberlegierungen enthält, wobei auf möglichst geringe Thermospannung gegenüber dem Material der Detektoranschlußdrähte EA und demjenigen der folgenden Schaltelemente FSE bzw. der abgehenden Anschlußleitung AAL (üblicherweise Kupfer) zu achten ist, damit keine temperaturabhängigen Fehlerspannungen im Meßkreis entstehen können.

Um die Eigenstrahlung der sich im Detektorgesichtsfeld DGF befindlichen optischen Elemente OE weitgehend zu elimineren, sind erfindungsgemäß folgende Maßnahmen zu treffen:

Sämtliche optischen Elemente OE müssen sich in gutem thermischen Kontakt mit dem Montagekörper MK befinden, was z.B. durch großflächige, innige Berührung und/oder formschlüssige Verbindungen erreicht wird, damit sichergestellt ist, daß zwischen Aktivem Detektorelement ADE und den optischen Elementen OE keine wesentlichen Temperaturunterschiede bestehen können, da nur solche Temperaturunterschiede prinzipiell in der Lage sind Störstrahlung auf das Aktive Detektorelement ADE zu entsenden.

Das spektrale Transmissionsverhalten von brechenden optischen Elementen OE (z.B. Linsen oder Prismen) bzw. das spektrale Reflexionsverhalten von reflektierenden optischen Elementen OE (z.B. Spiegel oder Grenzschichten) ist dem spektralen Transmissionsverhalten des Detektorfensters DEF bzw. dem spektralen Empfindlichkeitsverlauf des Detektors DET so anzupassen, daß die entsprechenden Verläufe weitgehend identisch sind, oder aber daß der spektrale Transmissionsbereich von brechenden optischen Elementen OE bzw. der spektrale Reflexionsbereich von reflektierenden optischen Elementen OE einen größeren Wellenlängenbereich umfaßt, als er von den Grenzen des Spektralen Transmissionsbereichs des Detektorfensters DEF bzw. von den Grenzen der spektralen Empfindlichkeit des Detektors DET vorgegeben ist. Darüberhinaus ist darauf zu achten, daß die verwendeten Materialien der optischen Elemente OE eine möglichst hohe spektrale Transmission bzw. Reflexion aufweisen, damit die Störstrahlung, die durch das nichtideale Transmissionsverhalten von brechenden optischen Elementen OE bzw. das nichtideale Reflexionsverhalten von reflektierenden optischen Elementen OE infolge von z.B. Materialverunreinigungen möglichst gering bleibt. Ein geeignetes Linsenmaterial für die Niedertemperaturpyrometrie im Wellenlängenbereich von 8 µm bis 14 µm ist z. B. $BaF_2$ mit einem Transmissionsbereich von 0,2 µm bis 15 µm und einem Transmissionsgrad von größer als 0,95 in diesem Wellenlängenbereich. Die zu 1,0 fehlenden 5% an Transmissionsfähigkeit kommen nahezu ausschließlich durch die an den Linsenoberfächen stattfindende Reflexion aufgrund unterschiedlicher Brechungsindices zwischen Linsenmaterial und Luft zustande und können die Eigenstrahlung der den Maximalstrahlengang MSG berandenden Oberflächen in den Detektor reflektieren. Daher muß sichergestellt sein, daß sich der Montagekörper MK und alle an-und eingebauten Komponenten auf gleicher Temperatur befinden, bzw. sich keine nennenswerten Temperaturgradienten am Montagekörper MK ausbilden können. Diese Forderung wird erfindungsgemäß dadurch gelöst, daß der Montagekörper MK von einer oder mehreren äußeren Gehäusehülle(n) AGH umgeben ist, dergestalt, daß nur an ganz bestimmten Übergangsstellen US ein Wärmetransport durch Wärmeleitung von der äußeren Gehäusehülle AGH in den Montagekörper MK oder umgekehrt möglich ist. Wenn diese Übergangsstellen US erfindungsgemäß mit schlecht wärmeleitendem Material z.B. Kunststoffteile mit hohem Luftgehalt wie PU-Schäume etc. ausgeführt werden, so entsteht ein thermischer Tiefpaß, an dessen Ausgang sich der Montagekörper MK befindet. Von den auf die äußere Gehäusehülle AGH unmittelbar einwirkenden Schwankungen der Gehäuse-bzw. Umgebungstemperatur "erfährt" der Montagekörper MK auf Grund der Tiefpaßfunktion der umhüllenden Anordnung insbesondere wegen der erfindungsgemäßen Ausgestaltung der Übergangsstellen US nur sehr verzögert und in erheblich abgeschwächtem Maße.Auf Grund der erfindungsgemäßen Ausbildung des Montagekörpers MK mit gut wärmeleitendem Material breiten sich lokale Änderungen seiner Temperatur schnell über den ganzen Montagekörper MK aus , sodaß immer ein quasistationärer Teperaturzustand aller sich im und am Montagekörper befindlichen Komponenten gewährleistet ist. Für die Lage der Übergangsstellen US und die Form der sie ausbildenden, aus schlecht wärmeleitendem Material bestehenden Paßstücke können auf Grund der i.a. komplexen Konstruktionsgeometrie des Montagekörpers MK keine allgemeingültigen Regeln angegeben werden. Mittels rechentechnischer Programme wird unter der Zielbedingung einer gleichmäßigen Temperaturverteilung in der jeweiligen Ausgestaltung des Montagekörpers MK in bekannter Weise eine für eine vorgegebene Konstruktion günstige Anordnung und Ausbildung der Übergangsstellen US ermittelt werden. Dabei brauchen die Paßstücke der Übergangsstellen US nicht stab- oder ringförmig ausgebildet zu sein, ebensodenkbar ist z. B. eine sternförmige Ausbildung, die aus den Temperaturen an den Berührpunkten mit der äußeren Gehäusehülle AGH einen Temperaturmittelwert in ihrem Zentrum bildet und diesen an den Montagekörper MK oder an eine andere äußere Gehäusehülle weitergibt. Für den Einsatz unter extremen Umgebungsbedingungen ist eine weitere Verschachtelung in eine alles umgebende äußerste Gehäusehülle denkbar, wobei die äußere Gehäusehülle und/ oder wahlweise der Montagekörper MK z.B. durch Heizbänder oder -Folien thermostatisiert wird. Die dadurch geschaffene Temperaturbarriere kann von außen eingebrachten Temperaturschwankungen nicht überwunden werden.

Um prinzipbedingt ohne dynamische Fehler die Temperatur $T_{ADE}$ des Aktiven Detektorelements ADE zu bestimmen, wird erfindungsgemäß eine zweite temperaturabhängige physikalische Größe des Detektors DET bzw. des Aktiven Detektorelements ADE erfaßt und ausgewertet. Diese weitere physikalische Größe muß die Eigenschaft haben, nur wenig oder überhaupt nicht von der einfallenden Strahlung abzuhängen, sondern ausschließlich bzw. im wesentlichen eine Funktion der Temperatur $T_{ADE}$ des Aktiven Detektorelements ADE zu sein. Beispielhaft für eine solche zusätzlich auswertbare physikalische Größe bei gängigen Strahlungssensoren sei die Kapazität eines pyroelektrischen Detektors oder einer Photodiode (bei konstanter Vorspannung), die Induktivität eines Nickel- Bolometers oder der Innenwiderstand einer Thermosäule genannt. Bei den thermischen Strahlungsdetektoren tritt grundsätzlich immer eine geringe Abhängigkeit der zusätzlich erfaßten physikalischen Größe von der einfallenden und absorbierten Strahlung auf, dergestalt, daß sich auf Grund der absorbierten Strahlungsenergie das Aktive Detektorelement geringfügig erwärmt (Funktionsprinzip). Bei den üblicherweise sehr kleinen Detektorgesichtsfeldern DGF und den damit verbundenen niedrigen Strahlungsleistungen sind diese Temperaturerhöhungen außerordentlich gering (an der Nachweisgrenze eines thermischen Detektors in der Größenordnung von 0,001K); nur bei hohen Objekttemperaturen, großen Detektorgesichtsfeldern, großen Meßfleckdurchmessern und geringer Meßentfernung treten größere Temperaturerhöhungen auf, die jedoch selbst an der Belastungsgrenze üblicher Detektoren den Wert von 0,1K nicht überschreiten.

Da auf elektrischem Wege bei alleiniger Betrachtung der zusätzlich erfaßten temperaturabhängigen physikalischen Größe nicht unterschieden werden kann, ob die Temperatur $T_{ADE}$ auf Grund einfallender und absorbierter Strahlung erhöht ist, oder ob eine erhöhte Umgebungstemperatur vorliegt, legt diese geringe Abhängigkeit die Unsicherheit der Temperaturbestimmung des Aktiven Detektorelements ADE fest. Durch rechentechnische Verarbeitung beider Signale kann jedoch diese gegenseitige Abhängigkeit der zusätzlich erfaßten temperaturabhängigen physikalischen Größe von der die einfallende und absorbierte Strahlung repräsentierenden Größe prinzipiell beseitigt werden, indem der funktionale Zusammenhang zweier Variabler, nämlich d es eigentlichen Detektorsignals in Abhängigkeit von der einfallenden und absorbierten Strahlung und der aktuellen Temperatur des Aktiven Detektorelements ADE einem Rechner in Form einer oder mehrerer empirisch ermittelter Funktionen oder in Form einer meßtechnisch gewonnenen Wertetabelle mitgeteilt wird und dieser dann daraus die zugehörigen Werte von einfallender und absorbierter Strahlungsleistung und der (korrigierten) Temperatur $T_{ADE}$ des Aktiven Detektorelements ADE ohne diese einfallende und absorbierte Strahlungsleistung ermittelt. Sinngemäß wird so vorgegangen, daß aus dem Strahlungssignal über den Empfindlichkeitskoeffizienten die Strahlungsleistung bestimmt wird, die vom Detektor DET absorbiert oder ausgesandt wird. Diese Strahlungsleistung ruft eine Temperaturänderung des Aktiven Detektorelements ADE hervor, die aus Kenntnis des Wärmeleitwerts des Aktiven Detektorelements ADE zum Detektorgehäuse bestimmt wird. Der Meßwert der Temperatur des Aktiven Detektorelements ADE ist um diese Änderung zu korrigieren.

Auf Grund der Tatsache, daß im allgemeinen die Empfindlichkeit eines Sensors bezüglich einer bestimmten physikalischen Anregung temperaturabhängig ist, stellt dieses Verfahren eine iterative Näherung dar, die bei nicht zu großen Abhängigkeiten der zusätzlich erfaßten temperaturabhängigen physikalischen Größe von der einfallenden und absorbierten Strahlung konvergiert, aber nach endlich vielen Iterationsschritten eben einen Restfehler beinhaltet, der jedoch gemäß obiger Abschätzung sicher kleiner als 0,1K ist. Damit ist die prinzipielle Unsicherheit eines Temperaturmeßwertes, der nach diesem Auswerteverfahren gewonnen wurde, auf etwa 0,1K begrenzt, die mittels den beschriebenen rechentechnischen Verfahren noch weiter reduziert werden kann.

Analog zu dem üblicherweise zeitlich nacheinander oder abwechselnden Erfassen der beiden physikalischen Größen besteht die Möglichkeit beide Größen zeitgleich zu erfassen, wobei die elektrischen Signale spektral trennbar gestaltet sein müssen. Dies ist beispielsweise durch eine Einrichtung möglich, die den Strahlengang zyklisch unterbricht und die so dem Strahlungssignal einen Wechsel(spannungs)charakter aufprägt, wogegen die Temperatur $T_{ADE}$ des Aktiven Detektorelements ADE durch ein im wesentlichen konstantes Signal, also einem Gleich(spannungs)signal repräsentiert wird. Diese spektrale Trennung der Sensorsignale ist grundsätzlich immer möglich, indem beispielsweise bei einem pyroelektrischen Strahlungsdetektor die auf Grund einfallender und absorbierten Strahlung erzeugte Ladung als quasi- Gleichsignal verarbeitet wird (pyroelektrische Detektoren können i.a. nur Strahlungsschwankungen detektieren, daher ist üblicherweise eine Modulationseinheit vorhanden, die den Strahlengang zum Detektor zyklisch unterbricht) und die sich auf Grund der Temperatur $T_{ADE}$ des Aktiven Detektorelements ergebende Kapazität die beispielsweise als frequenzbestimmende Komponente eines RC- Oszillators wirkt, als Wechselsignal hoher Frequenz weiterverarbeitet wird.

Bei einem Bolometer (strahlungempfindlicher ohmscher Widerstand) repräsentiert der Gleichanteil der Spannung über dem Bolometerwiderstand die Temperatur $T_{ADE}$ des Aktiven Detktorelements ADE (z.B. in Abhängigkeit von der Umgebungstemperatur) und der Wechselanteil dieser Spannung, hervorgerufen durch eine moduliert einfallende Strahlung, die einfallende und absorbierte Strahlungsleistung, wobei beispielhaft hier eine Konstantstromspeisung des Bolometerwiderstandes angenommen wurde.

Die prinzipiellen Grenzen und Erfordernisse des Erfassens zweier spektral getrennter Größen aus einem Sensor, bzw. einer physikalischen Größe die spektral getrennt zwei Informationen trägt, entsprechen denen des zeitlich nacheinander oder abwechselnden Erfassens zweier Größen aus einem Sensor, wie bereits beschrieben.

Für die überwiegenden technischen Einsatzgebiete ist eine Temperaturunsicherheit von 0,1 K, vor allem in der Niedertemperatur-Pyrometrie, ein gegenüber herkömmlichen Verfahren wesentlich verbesserter Wert, insbesondere deshalb, weil die erreichbaren, absoluten Genauigkeiten aufgrund schwankender oder nur annäherungsweise bekannter bzw. temperaturabhängiger Emissionsgrade oder über das Meßobjekt eingespiegelte Fremdstrahlung um wenigstens eine Größenordnung schlechter ist.

## Patentansprüche

1. Verfahren zur Kompensation der Gehäuse- oder Umgebungstemperatur eines Pyrometers, das insbesondere mit einem Photonendetektor oder thermischen Detektor zur Ermittlung mindestens einer physikalischen Größe der Strahlungsdetektion ausgestattet ist,
   dadurch **gekennzeichnet,**
   daß das Kompensationssignal über die Gehäuse- oder Umgebungstemperatur des Pyrometers aus dem für die Strahlungsdetektion vorgesehenen Element des Detektors gewonnen wird,
   wobei eine weitere, zweite physikalische Größe des für die Strahlungsdetektion vorgesehenen Elements des Detektors ausgewertet wird, die überwiegend oder ausschließlich von der Gehäuse- oder Umgebungstemperatur des Pyrometers abhängt und insbesondere nur eine geringe bis keine Abhängigkeit von der einfallenden, detektierten Strahlung aufweist.

2. Verfahren zur Kompensation der Gehäuse- oder Umgebungstemperatur eines Pyrometers, das insbesondere mit einem Photonendetektor oder thermischen Detektor zur Ermittlung mindestens einer physikalischen Größe der Strahlungsdetektion ausgestattet ist,
   dadurch **gekennzeichnet,**
   daß das Kompensationssignal über die Gehäuse- oder Umgebungstemperatur des Pyrometers aus dem für die Strahlungsdetektion vorgesehenen Element des Detektors gewonnen wird,
   wobei eine weitere, zweite physikalische Größe des für die Strahlungsdetektion vorgesehenen Elements des Detektors ausgewertet wird, die überwiegend oder ausschließlich von der Eigentemperatur des für die Strahlungsdetektion vorgesehenen Elements des Detektors oder des Detektors selbst abhängt, und insbesondere nicht oder nur wenig von der einfallenden, detektierten Strahlung abhängt.

3. Verfahren nach Anspruch 1 oder 2,
   dadurch **gekennzeichnet,**
   daß zur Trennung der Information über die einfallende, detektierte Strahlung von derjenigen über die Gehäuse- oder Umgebungstemperatur des Pyrometers oder über die Eigentemperatur des Detektors bzw. seines für die Strahlungsdetektion vorgesehenen Elements, die den zu trennenden Informationen zugeordneten physikalischen Größen alternierend bestimmt werden.

4. Verfahren nach Anspruch 1 oder 2,
   dadurch **gekennzeichnet,**
   daß zur Trennung der Information über die einfallende, detektierte Strahlung von derjenigen über die Gehäuse- oder Umgebungstemperatur des Pyrometers oder über die Eigentemperatur des Detektors bzw. seines für die Strahlungsdetektion vorgesehenen Elements,die den zu trennenden Informationen zugeordneten physikalischen Größen simultan, aber spektral getrennt erfaßt werden.

5. Verfahren zur Kompensation der Gehäuse- oder Umgebungstemperatur eines Pyrometers, das insbesondere mit einem Photonendetektor oder thermischen Detektor zur Strahlungsdetektion ausgestattet ist,
   dadurch **gekennzeichnet,**
   daß das Kompensationssignal für die Gehäuse- oder Umgebungstemperatur des Pyrometers durch Auswertung derselben physikalischen Größe des für die Strahlungsdetektion vorgesehenen Elements gewonnen wird, die auch die Information über die einfallende, detektierte Strahlung beinhaltet.

6. Verfahren nach Anspruch 5,
   dadurch **gekennzeichnet,**
   daß dieselbe physikalische Größe, die auch die Information über die einfallende, detektierte Strahlung beinhaltet, in mindestens zwei voneinander verschiedenen, spektral getrennten Bereichen getrennt und ausgewertet wird.

7. Verfahren nach Anspruch 1 oder 2,
   dadurch **gekennzeichnet,**
   daß zur Feststellung der Abhängigkeit der physikalischen Größen des für die Strahlungsdetektion vorgesehenen Elements des Detektors von der Gehäuse- oder Umgebungstemperatur eines damit ausgestatteten Pyrometers bzw. von der Eigentemperatur des Elements, der Detektor oder das Pyrometer bei abgedeckter Strahlungseintrittsöffnung definiert veränderlichen Temperaturen ausgesetzt wird und damit der Zusammenhang der physikalischen Größen von der Gehäuse- oder Umgebungstemperatur des Pyrometers bzw. von der Eigentemperatur des Detektors erhalten wird.

8. Pyrometer-Vorrichtung mit stark reduzierter Empfindlichkeit gegenüber Schwankungen der Gehäuse- oder Umgebungstemperatur, insbesondere zur Durchführung des Verfahrens nach einem der Ansprüche 1 bis 7,
dadurch **gekennzeichnet,**
daß der Strahlungsdetektor eine Thermosäule ist, deren Thermospannung ein Maß für die einfallende, detektierte Strahlung darstellt und deren Innenwiderstand ein Maß für die Gehäuse- oder Umgebungstemperatur des Pyrometers bzw. für die Eigentemperatur des für die Strahlungsdetektion vorgesehenen Elements der Thermosäule ist.

9. Vorrichtung nach Anspruch 8,
dadurch **gekennzeichnet,**
daß zur Trennung der Information über die einfallende, detektierte Strahlung von derjenigen über die Gehäuse- oder Umgebungstemperatur bzw. über die Eigentemperatur des für die Strahlungsdetektion vorgesehenen Elements der Thermosäule, eine Einrichtung zur alternierenden Bestimmung der Thermospannung und des Innenwiderstandes der Thermosäule vorhanden ist.

10. Vorrichtung nach Anspruch 8 oder 9,
dadurch **gekennzeichnet,**
daß zur Trennung der Information über die einfallende, detektierte Strahlung von derjenigen über die Gehäuse- oder Umgebungstemperatur bzw. über die Eigentemperatur des für die Strahlungsdetektion vorgesehenen Elements der Thermosäule ein gleichspannungsgekoppelter Pfad für die Thermospannung vorhanden ist und der Innenwiderstand der Thermosäule als frequenzbestimmendes Element in einer Oszillatorschaltung vorgesehen ist.

11. Pyrometer-Vorrichtung mit stark reduzierter Empfindlichkeit gegenüber Schwankungen der Gehäuse- oder Umgebungstemperatur, insbesondere zur Durchführung der Verfahren nach einem der Ansprüche 1 bis 4 oder 7,
dadurch **gekennzeichnet,**
daß der Strahlungsdetektor ein pyroelektrischer Detektor oder ein Photonen-Sperrschicht-Detektor ist, dessen freigesetzte Ladung ein Maß für die einfallende, detektierte Strahlung ist und dessen Kapazität ein Maß für die Gehäuse- oder Umgebungstemperatur des Pyrometers bzw. für die Eigentemperatur des für die Strahlungsdetektion vorgesehenen Elements des pyroelektrischen Detektors bzw. des Photonen-Sperrschicht-Detektors ist.

12. Vorrichtung nach Anspruch 11,
dadurch **gekennzeichnet,**
daß zur Trennung der Information über die einfallende, detektierte Strahlung von derjenigen über die Gehäuse- oder Umgebungstemperatur bzw. über die Eigentemperatur des für die Strahlungsdetektion vorgesehenen Elements des pyroelektrischen Detektors oder des Photonen-Sperrschicht-Detektors eine Einrichtung zur alternierenden Bestimmung der freigesetzten Ladung und der Kapazität des pyroelektrischen Detektors oder des Photonen-Sperrschicht-Detektors vorhanden ist.

13. Vorrichtung nach Anspruch 11 oder 12,
dadurch **gekennzeichnet,**
daß zur Trennung der Information über die einfallende, detektierte Strahlung von derjenigen, über die Gehäuse- oder Umgebungstemperatur bzw. über die Eigentemperatur des für die Strahlungsdetektion vorgesehenen Elements des pyroelektrischen Detektors oder des Photonen-Sperrschicht-Detektors ein Ladungsverstärker für die freigesetzte Ladung vorhanden ist und die Kapazität des pyroelektrischen Detektors oder des Photonen-Sperrschicht-Detektors ein frequenzbestimmendes Element einer Oszillatorschaltung ist.

14. Pyrometer-Vorrichtung mit stark reduzierter Empfindlichkeit gegenüber Schwankungen der Gehäuse- oder Umgebungstemperatur, insbesondere zur Durchführung des Verfahrens nach einem der Ansprüche 1 bis 4 oder 7,
dadurch **gekennzeichnet,**
daß der Strahlungsdetektor ein Bolometer oder ein Photonenleiter ist, dessen Ohm'scher Widerstand ein Maß für die einfallende, detektierte Strahlung ist, und dessen Induktivität ein Maß für die Gehäuse- oder Umgebungstemperatur des Pyrometers bzw. für die Eigentemperatur des für die Strahlungsdetektion vorgesehenen Elements des Bolometers oder des Photonenleiters ist.

**15.** Vorrichtung nach Anspruch 14,
dadurch **gekennzeichnet,**
daß zur Trennung der Information über die einfallende, detektierte Strahlung von derjenigen über die Gehäuse- oder Umgebungstemperatur bzw. über die Eigentemperatur des für die Strahlungsdetektion vorgesehenen Elements des Bolometers oder des Photonenleiters eine Einrichtung zur alternierenden Bestimmung des Ohm'schen Widerstandes und der Induktivität des Bolometers oder des Photonenleiters vorhanden ist.

**16.** Vorrichtung nach einem der Ansprüche 14 oder 15,
dadurch **gekennzeichnet,**
daß zur Trennung der Information über die einfallende, detektierte Strahlung von derjenigen über die Gehäuse- oder Umgebungstemperatur bzw. von derjenigen über die Eigentemperatur des für die Strahlungsdetektion vorgesehenen Elements des Bolometers oder des Photonenleiters, eine Gleichspannungsmeßeinrichtung zur Bestimmung des Ohm'schen Widerstandes vorhanden ist und die Induktivität ein frequenzbestimmendes Element einer Oszillatorschaltung ist.

**17.** Pyrometer-Vorrichtung mit stark reduzierter Empfindlichkeit gegenüber Schwankungen der Gehäuse- oder Umgebungstemperatur, insbesondere zur Durchführung des Verfahrens nach einem der Ansprüche 5 und 6,
dadurch **gekennzeichnet,**
daß der Strahlungsdetektor ein Bolometer oder ein Photonenleiter ist, dessen Ohm'scher Widerstand sich in Folge einer Strahlungsmodulation periodisch verändert, wobei der Gleichanteil des zeitlichen Widerstandsverlaufs ein Maß für die Gehäuse- oder Umgebungstemperatur des Pyrometers bzw. die Eigentemperatur des für die Strahlungsdetektion vorgesehenen Elements des Bolometers oder des Photonenleiters ist, und die durch die Strahlungsmodulation hervorgerufenen Wechselanteile im zeitlichen Widerstandsverlauf ein Maß für die einfallende, detektierte Strahlung sind.

## Claims

**1.** Method for the compensation of the casing or ambient temperature of a pyrometer, which is in particular equipped with a photon detector or thermal detector for determining at least one physical quantity of the radiation detection, characterized in that the compensation signal is obtained via the casing or ambient temperature of the pyrometer from the detector element provided for the radiation detection and in which a further, second physical quantity of the detector element provided for radiation detection is evaluated and which is preponderantly or exclusively dependent on the casing or ambient temperature of the pyrometer and has in particular only little to no dependence on the incident, detected radiation.

**2.** Method for the compensation of the casing or ambient temperature of a pyrometer, which is in particular equipped with a photon detector or thermal detector for the determination of at least one physical quantity of the radiation detection, characterized in that the compensation signal is obtained via the casing or ambient temperature of the pyrometer from the detector element provided for radiation detection and in which a further, second physical quantity of the detector element provided for the radiation detection is evaluated and which preponderantly or exclusively is dependent on the natural temperature of the detector element provided for the radiation detection or the actual detector and which in particular is not or only slightly dependent on the incident, detected radiation.

**3.** Method according to claim 1 or 2, characterized in that for the separation of the information on the incident, detected radiation of the information on the incident, detected radiation from that concerning the casing or ambient temperature of the pyrometer or on the natural temperature of the detector or its element provided for radiation detection, the physical quantities associated with the information to be separated are determined in alternating manner.

**4.** Method according to claim 1 or 2, characterized in that for the separation of the information on the incident, detected radiation from that concerning the casing or ambient temperature of the pyrometer or on the natural temperature of the detector or its element provided for radiation detection, the physical quantities associated with the information to be separated are determined simultaneously, but in spectrally separated manner.

5. Method for the compensation of the casing or ambient temperature of a pyrometer, which is in particular equipped with a photon detector or thermal detector for radiation detection, characterized in that the compensation signal for the casing or ambient temperature of the pyrometer is obtained through the evaluation of the same physical quantity of the element provided for the radiation detection as also contains information on the incident, detected radiation.

6. Method according to claim 5, characterized in that the same physical quantity also containing information on the incident, detected radiation, is separated into at least two different, spectrally separated areas and evaluated.

7. Method according to claim 1 or 2, characterized in that for determining the dependence of the physical quantities of the detector element provided for radiation detection on the casing or ambient temperature of a pyrometer equipped therewith or the natural temperature of the element, the detector or the pyrometer, with the radiation entrance opening covered, is exposed to clearly defined, variable temperatures and in this way the interrelation of the physical quantities of the casing or ambient temperature of the pyrometer or the natural temperature of the detector is obtained.

8. Pyrometer means with a greatly reduced sensitivity to fluctuations of the casing or ambient temperature, particularly for performing the method according to one of the claims 1 to 7, characterized in that the radiation detector is a thermopile, whose thermoelectric voltage represents a measure for the incident, detected radiation and whose internal resistance is a measure for the casing or ambient temperature of the pyrometer or for the natural temperature of the thermophile element provided for radiation detection.

9. Means according to claim 8, characterized in that for separating the information concerning the incident, detected radiation from that concerning the casing or ambient temperature or concerning the natural temperature of the thermopile element provided for radiation detection, there is a device for the alternating determination of the thermoelectric voltage and the internal resistance of the thermopile.

10. Means according to claim 8 or 9, characterized in that for separating the information concerning the incident, detected radiation from that concerning the casing or ambient temperature or concerning the natural temperature of the thermopile element provided for radiation detection, there is a d.c. voltage-coupled path for the thermoelectric voltage and the internal resistance of the thermopile is provided as a frequency-determining element in an oscillator circuit.

11. Pyrometer means with greatly reduced sensitivity to fluctuations of the casing or ambient temperature, particularly for performing the method according to one of the claims 1 to 4 or 7, characterized in that the radiation detector is a pyroelectric detector or photonbarrier layer detector, whose released charge is a measure for the incident, detected radiation and whose capacity is a measure for the casing or ambient temperature of the pyrometer or for the natural temperature of the element of the pyroelectric detector or the photon - barrier layer detector provided for radiation detection.

12. Means according to claim 11, characterized in that for the separation of the information concerning the incident, detected radiation from that concerning the casing or ambient temperature or concerning the natural temperature of the element of the pyroelectric detector or the photon - barrier layer detector provided for radiation detection, a device is provided for the alternating determination of the released charge and the capacity of the pyroelectric detector or the photon - barrier layer detector.

13. Means according to claim 11 or 12, characterized in that for separating the information concerning the incident, detected radiation from that concerning the casing or ambient temperature or concerning the natural temperature of the element of the pyroelectric detector or the photon - barrier layer detector provided for radiation detection, a charge amplifier is provided for the released charge and the capacity of the pyroelectric detector or the photon - barrier layer detector is a frequency-determining element of an oscillator circuit.

14. Pyrometer means with greatly reduced sensitivity to fluctuations of the casing or ambient temperature, particularly for performing the method according to one of the claims 1 to 4 or 7, characterized in that the radiation detector is a bolometer or a photon conductor, whose Ohmic resistance is a measure for the incident, detected radiation and whose inductance is a measure for the casing or ambient temperature of the pyrometer or for the natural temperature of the element of the bolometer or photon conductor provided for radiation detection.

15. Means according to claim 14, characterized in that for separating the information on the incident, detected radiation from that concerning the casing or ambient temperature or concerning the natural temperature of the element of the bolometer or photon conductor provided for radiation detection, a device is provided for the alternating determination of the Ohmic resistance and the inductance of the bolometer or the photon conductor.

16. Means according to one of the claims 14 or 15, characterized in that for the separation of the information concerning the incident, detected radiation from that concerning the casing or ambient temperature or that concerning the natural temperature of the element of the bolometer or the photon conductor provided for radiation detection, a d.c. voltage measuring device is provided for determining the Ohmic resistance and the inductor is a frequency-determining element of an oscillator circuit.

17. Pyrometer means with greatly reduced sensitivity to the fluctuations of the casing or ambient temperature, particularly for performing the method according to one of the claims 5 and 6, characterized in that the radiation detector is a bolometer or photon conductor, whose Ohmic resistance periodically changes as a result of a radiation modulation, the d.c. component of the time resistance path is a measure for the casing or ambient temperature of the pyrometer or the natural temperature of the bolometer or photon conductor element provided for the radiation detection and the a.c. components in the time resistance path caused by the radiation modulation are a measure for the incident, detected radiation.

**Revendications**

1. Procédé de compensation de la température du boîtier ou de la température ambiante d'un pyromètre, équipé notamment d'un détecteur de photons ou d'un détecteur thermique pour déterminer au moins une grandeur physique de la détection du rayonnement,
   caractérisé en ce que :
   le signal de compensation de la température du boîtier ou de la température ambiante du pyromètre s'obtient à partir de l'élément du détecteur prévu pour détecter le rayonnement,
   une autre, seconde grandeur physique de l'élément du détecteur prévu pour la détection du rayonnement étant exploitée, cette autre grandeur dépendant principalement ou exclusivement de la température du boîtier ou de la température ambiante du pyromètre et notamment ne dépend pas du rayonnement incident à détecter ou n'en dépend que de façon réduite.

2. Procédé de compensation de la température du boîtier ou de la température ambiante d'un pyromètre, notamment équipé d'un détecteur de photons ou d'un détecteur thermique pour déterminer au moins une grandeur physique de détection du rayonnement,
   caractérisé en ce que
   on obtient le signal de compensation concernant la température du boîtier ou la température ambiante du pyromètre à partir de l'élément du détecteur prévu pour la détection du rayonnement
   on exploite une autre, seconde grandeur physique de l'élément du détecteur prévu pour la détection du rayonnement, grandeur qui elle-même dépend principalement ou exclusivement de la température propre de l'élément du détecteur ou même du détecteur prévu pour la détection du rayonnement, et ne dépend pas du rayonnement détecté, incident ou n'en dépend que très peu.

3. Procédé selon la revendication 1 ou 2,
   caractérisé en ce que pour séparer l'information concernant le rayonnement incident, détecté, de l'information concernant la température du boîtier ou la température ambiante du pyromètre ou de la température propre du détecteur ou de son élément prévu pour la détection du rayonnement, on détermine en alternance les grandeurs physiques associés aux informations à séparer.

4. Procédé selon la revendication 1 ou 2,
   caractérisé en ce que pour séparer l'information concernant le rayonnement incident à détecter de l'information concernant la température du boîtier ou la température ambiante du pyromètre ou la température propre du détecteur ou de son élément prévu pour la détection du rayonnement, on détecte simultanément, mais avec séparation spectrale, les grandeurs physiques associées aux informations à séparer.

5. Procédé de compensation de la température du boîtier ou de la température ambiante d'un pyromètre équipé notamment d'un détecteur de photons ou d'un détecteur thermique pour la détection du rayonnement, caractérisé en ce que
on obtient le signal de compensation pour la température du boîtier ou de la température ambiante du pyromètre par exploitation de la même grandeur physique de l'élément prévu pour la détection du rayonnement que celle qui contient l'information relative au rayonnement incident, détecté.

6. Procédé selon la revendication 5, caractérisé en ce que la même grandeur physique que celle qui contient l'information relative au rayonnement incident, détecté, est séparée et exploitée dans au moins deux plages spectrales différentes l'une de l'autre.

7. Procédé selon la revendication 1 ou 2,
caractérisé en ce que pour déterminer la dépendance des grandeurs physiques de l'élément du détecteur prévu pour la détection du rayonnement par rapport à la température du boîtier ou la température ambiante du pyromètre équipé de cet élément ou de la température propre de l'élément, on utilise le détecteur ou le pyromètre en cachant l'ouverture d'entrée du rayonnement et en l'exposant à des températures variables, déterminées, et on obtient la relation des grandeurs physiques de la température du boîtier ou de la température ambiante du pyromètre ou de la température propre du détecteur.

8. Dispositif de pyromètre à sensibilité fortement réduite vis à vis des variations de la température du boîtier ou de la température ambiante notamment pour la mise en oeuvre du procédé selon l'une des revendications 1 à 7, caractérisé en ce que le détecteur de rayonnement est une colonne thermique dont la tension thermique est une mesure du rayonnement incident, détecté, et dont la résistance interne est une mesure de la température du boîtier ou de la température ambiante du pyromètre ou de la température propre de l'élément de la colonne thermique prévu pour la détection du rayonnement.

9. Dispositif selon la revendication 8, caractérisé en ce que pour séparer l'information concernant le rayonnement incident, détecté, de l'information concernant la température du boîtier ou la température ambiante ou la température propre de l'élément de la colonne thermique prévu pour la détection du rayonnement, on a une installation pour déterminer en alternance la tension thermique et la résistance interne de la colonne thermique.

10. Dispositif selon la revendication 8 ou 9, caractérisé en ce que pour séparer l'information relative au rayonnement incident, détecté, de celle relative à la température du boîtier ou à la température ambiante ou de la température propre de l'élément de la colonne thermique prévu pour la détection du rayonnement, on a un chemin à couplage en tension continue pour la tension thermique et la résistance interne de la colonne thermique est l'élément déterminant la fréquence d'un circuit oscillant.

11. Dispositif de pyromètre à sensibilité fortement réduite vis-à-vis des variations de la température du boîtier ou de la température ambiante, notamment pour la mise en oeuvre du procédé selon l'une des revendications 1 à 4 ou 7, caractérisé en ce que le détecteur de rayonnement est un détecteur pyro-électrique ou un détecteur à couche de blocage de photons, dont la charge libérée est une mesure du rayonnement incident, détecté, et dont la capacité est une mesure de la température du boîtier ou de la température ambiante du pyromètre ou de la température propre de l'élément du détecteur pyro-électrique ou du détecteur à couche de blocage de photons prévu pour la détection du rayonnement.

12. Dispositif selon la revendication 11, caractérisé en ce que pour séparer l'information concernant le rayonnement incident, détecté, de celle concernant la température du boîtier ou la température ambiante ou la température propre de l'élément du détecteur pyro-électrique ou du détecteur à couche de blocage de photons, prévu pour la détection du rayonnement, on a une installation pour déterminer en alternance la charge libérée et la capacité du détecteur pyro-électrique ou du détecteur à couche de blocage de photons.

13. Dispositif selon la revendication 11 ou 12, caractérisé en ce que pour séparer l'information concernant le rayonnement incident, détecté, de l'information concernant la température du boîtier ou la température ambiante ou la température propre de l'élément du détecteur pyro-électrique ou du détecteur de la couche de blocage de photons, prévu pour la détection du rayonnement, on a un amplificateur de charge pour la charge libérée et la capacité du détecteur pyro-électrique ou du détecteur à couche de blocage de photons est un élément d'un circuit oscillant qui détermine la fréquence.

14. Dispositif de pyromètre à sensibilité fortement réduite par rapport aux variations de la température du boîtier ou de la température ambiante, notamment pour la mise en oeuvre du procédé selon l'une des revendications 1 à 4 ou 7, caractérisé en ce que le détecteur de rayonnement est un bolomètre ou un conducteur de photons dont la résistance ohmique est une mesure du rayonnement incident, détecté, et dont l'inductance est une mesure de la température du boîtier ou de la température ambiante du pyromètre ou de la température propre de l'élément du bolomètre ou du conducteur de photons prévu pour la détection du rayonnement.

15. Dispositif selon la revendication 14, caractérisé en ce que pour séparer l'information concernant le rayonnement incident, détecté, de l'information concernant la température du boîtier ou la température ambiante ou la température propre de l'élément du bolomètre ou du conducteur de photons prévu pour la détection du rayonnement, il comporte une installation pour déterminer en alternance la résistance ohmique et l'inductance du bolomètre ou du conducteur de photons.

16. Dispositif selon l'une des revendications 14 ou 15, caractérisé en ce que pour séparer l'information concernant le rayonnement incident, détecté,de celle concernant la température du boîtier ou la température ambiante ou celle concernant la température propre de l'élément du bolomètre ou du conducteur de photons prévu pour la détection du rayonnement, on a une installation de mesure de tension continue pour déterminer la résistance ohmique et l'inductance est un élément d'un circuit oscillant qui détermine la fréquence.

17. Dispositif de pyromètre à sensibilité fortement réduite vis-à-vis des variations de la température du boîtier ou de la température ambiante, notamment pour la mise en oeuvre du procédé selon l'une des revendications 5 et 6, caractérisé en ce que le détecteur de rayonnement est un bolomètre ou un conducteur de photons dont la résistance ohmique varie périodiquement par suite d'une modulation de rayonnement, la partie continue de la courbe de résistance en fonction du temps étant une mesure de la température du boîtier ou de la température ambiante du pyromètre ou de la température propre de l'élément du bolomètre ou du conducteur de photons prévu pour détecter le rayonnement et la composante alternative provoquée par la modulation du rayonnement, en fonction du profil de la résistance dans le temps, est une mesure du rayonnement incident, détecté.

Fig. 1

EP 0 417 791 B1

Fig. 2

Fig. 3